# EUROPEAN PATENT APPLICATION

(11) **EP 4 806 871 A1**
(43) Date of publication of application: **16.09.2026**
(21) Application number: 26163437.2
(22) Date of filing: 10.03.2026
(51) Int. Cl.: C04B 41/00, C04B 41/52, C04B 41/90, G02B 5/08

(54) **LOW-STRESS OPTICAL SURFACING ON REACTION BONDED SILICON CARBIDE**

(30) Priority: 12.03.2025 US 202563770648 P; 05.03.2026 US 202619557720
(71) Applicant: II-VI Delaware, Inc., Wilmington, DE 19890 (US)
(72) Inventor: Branigan, Kyle, Saxonburg, PA 16056 (US); Himelinski, Stanley, Saxonburg, PA 16056 (US); Michaux, Domenic, Saxonburg, PA 16056 (US)
(74) Representative: Bosch Jehle Patentanwaltsgesellschaft mbH

(57) **Abstract**

Systems and methods are provided for low-stress optical surfacing on reaction bonded silicon carbide. A reaction bonded silicon carbide (RB-SiC) based structure may include a substrate, a physical vapor deposition (PVD) or other suitable vacuum deposition (VD) based optical layer on top of the substrate, and optionally one or more PVD (or other suitable vacuum deposition (VD) technique) based tacking layers disposed immediately on the surface of the substrate.

## Description

### CLAIM OF PRIORITY

This patent application claims priority to and claims benefit from United States Provisional Patent Application Serial No. 63/770648, filed on March 12, 2025. The above identified application is hereby incorporated herein by reference in its entirety.

### TECHNICAL FIELD

Aspects of the present disclosure relate to materials related technologies, and particularly to performance ceramics and metal matrix composite related technologies. More specifically, the present disclosure relates to methods and systems for implementing and utilizing low-stress optical surfacing on reaction bonded silicon carbide.

### BACKGROUND

Limitations and disadvantages of conventional performance ceramics and metal matrix composites will become apparent to one of skill in the art, through comparison of such systems with some aspects of the present disclosure as set forth in the remainder of the present application with reference to the drawings.

### BRIEF SUMMARY

System and methods are provided for low-stress optical surfacing on reaction bonded silicon carbide, substantially as shown in and/or described in connection with at least one of the figures, as set forth more completely in the claims.

These and other advantages, aspects and novel features of the present disclosure, as well as details of an illustrated embodiment thereof, will be more fully understood from the following description and drawings.

### BRIEF DESCRIPTION OF THE DRAWINGS

Fig. 1 illustrates an example reaction bonded silicon carbide (RB-SiC) and an example processing for forming thereof.
Fig. 2 illustrates an example reaction bonded silicon carbide (RB-SiC) with low-stress optical surfacing.
Fig. 3 illustrates a flowchart of an example process for forming reaction bonded silicon carbide (RB-SiC) with low-stress optical surfacing.

### DETAILED DESCRIPTION

The present disclosure is directed to materials related technologies, and particularly to performance ceramics and metal matrix composites and processes for producing and/or implementing thereof. In this regard, multi-phase based composites-that is, composites comprising material having different phases-are commonly used in various industries, such as where components or parts are expected to meet certain performance requirements (e.g., strength, thermal performance, optical performance). One example of such composites or material is silicon carbide (SiC) based composites. Nonetheless, while various implementations and embodiments disclosed herein are described with respect to silicon carbide (SiC) based composites, the disclosure is not so limited, and the solutions described may similarly be used with other suitable composites and/or other phases such as boron carbide (B₄C), diamond, etc.

In some instances, such composites may include composites where silicon carbide (SiC) is combined with other materials, compounds, or elements, which may be selected specifically to ensure meeting at least some of the desired performance requirements. In some instances, the silicon carbide (SiC) and/or the silicon carbide (SiC) based composites may be further processed, such as to further enhance performance. For example, in some instances composites may be processed to form, e.g., reaction bonded ceramics and metal-matrix composites. One such composite is reaction bonded silicon carbide (RB-SiC). In this regard, RB-SiC exhibits various desirable properties, such as low thermal expansion, high thermal conductivity, stiffness, and wear resistance. In some instances, such composites may be combined with other material, to form structures or combined composites that may exhibit particular desirable characteristics, that may be suitable for certain applications-e.g., applications requiring particular optical performance characteristics.

However, the manufacturing of such composites and/or components, particularly those that have to meet certain performance requirements, may have some limitations and/or may pose some challenges. For example, manufacturing and/or use of such high performance composites and/or components may be challenging when utilizing conventional machining techniques, such as to form final surface features and/or to create final tolerances. In such instances, more expensive processing techniques and equipment may need to be added and/or used during the manufacturing process, which may lead to increased costs and/or complexity.

Solutions based on the present disclosure may provide enhanced processes for forming such materials, overcoming some of the challenges of conventional solutions. In particular, solutions based on the present disclosure may address issues and/or challenges relating to manufacturing high performance composites, such as reaction bonded silicon carbide and similar materials (hard, multi-phase), and particularly to creating certain features (e.g., an optical surface) thereon. In various implementations, such composites may comprise a substrate and an optical layer on top of thereof, configured to provide the required optical functions. In this regard, the range of substrate materials and tailorable physical properties make it desirable in a wide range of high-performance applications. Example applications may include distance measuring Interferometry (DMI), scanning mirrors (active), complex structured mirrors (static), and high power laser devices (with high laser-induced damage threshold (LIDT)).

Conventionally, the process for forming the composites, particularly for forming composites meeting particular performance criteria (e.g., surfaces compositions on the composites that allow for the creation of an optical grade surface), may entail use of such techniques as chemical vapor deposition (CVD) of silane-derived silicon or CVD of silicon carbide. However, such techniques must be performed at high temperatures, and may have prohibitive costs. Solutions based on the present disclosure may address these issues by utilizing low-cost, low-temperature techniques to form the composites. In this regard, such a low-cost low-temperature solution allows for a wide range of substrates (thus yielding less impact of coefficient of thermal expansion (CTE) mismatch) and/or a wider range of potential applications (thus improving cost). Typically, such techniques as physical vapor deposition (PVD) are not used, as PVD based layers may be too thin to allow for substantial mechanical post-processing of surface. However, solutions based on the present disclosure may overcome such issues by depositing layers that are thick enough to allow for use of machining or polishing steps to the deposited material.

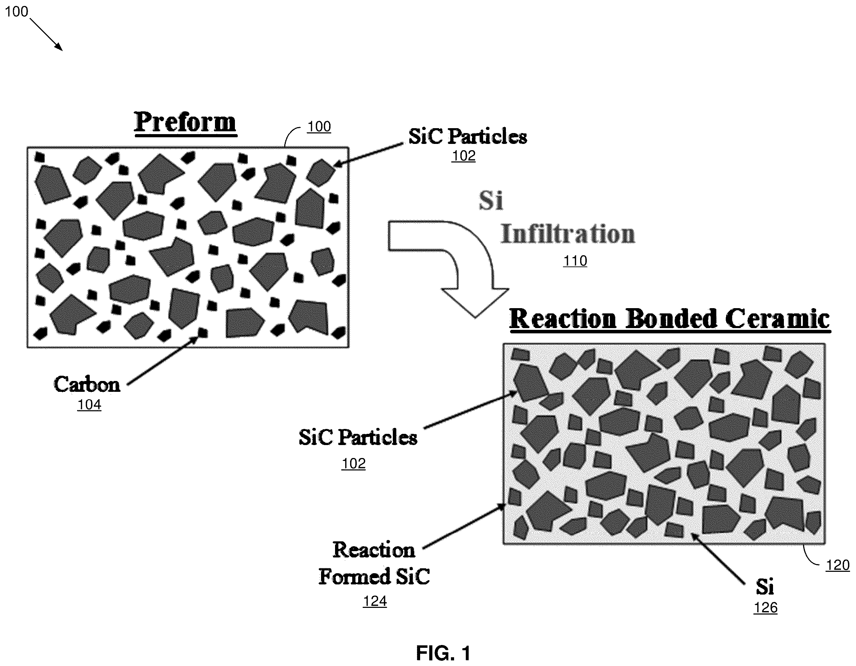

In various example embodiments, composites comprising a substrate, a surface (optical) layer, and optionally one or more tacking layers in-between, are produced using novel, more cost-effective processes. The substrate in such composites may comprise hard, multi-phase material (e.g., reaction bonded silicon carbide or similar composites). The surface (optical) layer comprises material suitable for creating an optical surface meeting the optical performance requirements expected of the combined composites (e.g., for particular applications). The tacking layer is a thin layer of suitable material selected to ensure adhesion between the substrate and the material used to make the optical surface. This deposition of the surface (optical) layer (and the tacking layer, if included) is done at a low temperature, using suitable deposition techniques, thus preventing retained stresses from forming in the part. The surface (optical) layer may be machined or post-processed, if needed, to meet the desired optical performance requirements. Example embodiments and related features are described in more detail below, with respect to Figs. 1-3.

Fig. 1 illustrates an example reaction bonded silicon carbide (RB-SiC) and an example processing for forming thereof. Shown in Fig. 1 is reaction bonded silicon carbide (RB-SiC) composite structure 120.

In this regard, reaction bonded SiC ceramics (e.g., the RB-SiC composite structure 120) may be produced by applying reactive infiltration of molten Si (shown as Si infiltration 110 in Fig. 1) into preforms comprising silicon carbide (SiC) and carbon (e.g., preform 100 in Fig. 1, comprising SiC particles 102 and carbon 104). With such processes-that is, use of Si infiltration-nominally zero process shrinkage may occur. Upon infiltration, the molten Si reacts with the carbon to form additional SiC (that is Si + C → SiC), bonding the structure together. Preforms for reaction bonding may be made typically by casting a slurry of SiC particles, carbon particles, and an organic material or additive that converts to carbon upon pyrolysis (e.g., phenolic). Accordingly, the final composite (e.g., the RB-SiC composite structure 120 in Fig. 1) comprises of the original SiC (SiC particles 102), reaction formed SiC (identified by reference number 124 in Fig. 1), and residual Si (identified by reference number 126 in Fig. 1). As noted above, in some instances, other suitable composites and/or other phases may be used, such as composites of SiC that also contain diamond, boron carbide (B₄C), etc.

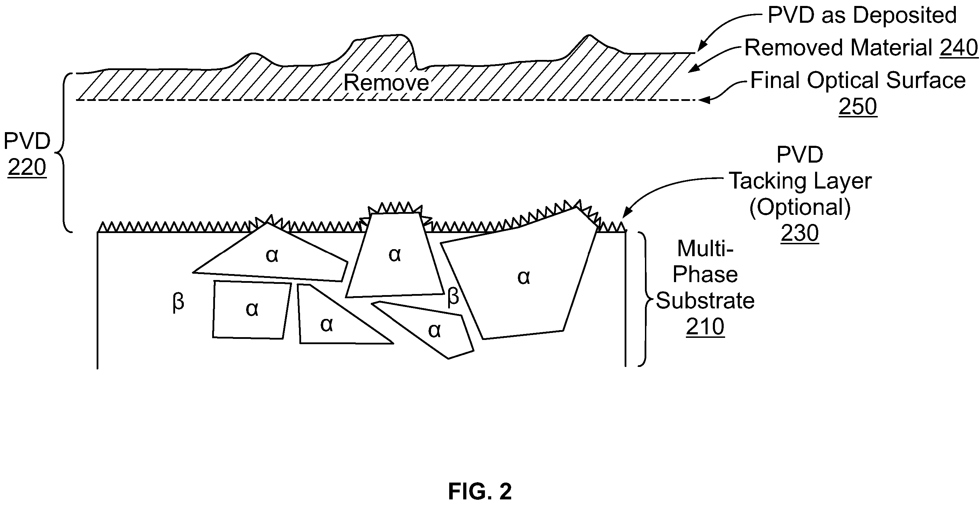

In accordance with the present disclosure, reaction bonded silicon carbide (RB-SiC) based composites may be produced in enhanced manner, such as by use of improved techniques to provide composites meeting the performance requirements of various intended application in more cost-effective way. An example of such composite and process for producing thereof are described with respect to Fig. 2.

Fig. 2 illustrates an example reaction bonded silicon carbide (RB-SiC) with low-stress optical surfacing. Shown in Fig. 2 is reaction bonded silicon carbide (RB-SiC) based structure 200 having low-stress optical surfacing.

The RB-SiC based structure 200 may be produced by a process that utilizes a low-cost low-temperature deposition technique, in accordance with the embodiment based on the present disclosure. In this regard, example low-cost low-temperature deposition techniques may include various vacuum deposition (VD) based techniques, such as physical vapor deposition (PVD).

The RB-SiC based structure 200 may comprise a substrate 210 and an optical layer 220 formed on top of the substrate 210 using a physical vapor deposition (PVD) (or other suitable vacuum deposition (VD) technique). The RB-SiC based structure 200 optionally may also comprise a tacking layer 230 disposed immediately (e.g., directly) on the surface of the substrate 210, using PVD (or other suitable vacuum deposition (VD) technique). In this regard, the optical layer 220 and the optional tacking layer 230 may be deposited using a single deposition step or two separate deposition steps.

The substrate 210 may comprise reaction bonded silicon-silicon-carbide (RB-SiC) material that is multi-phase and/or otherwise not easily polished to an optical finish. However, as noted above, other suitable composites and/or other phases may be used, such as composites of SiC that also contain diamond, boron carbide (B₄C), etc. The substrate 210 may be formed using any suitable forming processes, such as the process described with respect to Fig. 1.

The optical layer 220 may comprise suitable material or compounds for providing or otherwise facilitating the desired optical surface related characteristics. Example material that may be used in the optical layer 220 may comprise one or more of copper, nickel, aluminum, tin, gold, and/or silver.

The tacking layer 230 may comprise suitable material or compounds for providing or otherwise facilitating the desired tacking characteristics. Example material that may be used in the tacking layer 230 may comprise one or more of chromium, nickel-chromium, and/or titanium.

The tacking layer 230 may be a thin layer that is adherent to the substrate 210, whereas the optical layer 220, as formed, is disposed on top of the substrate 210 (and the tacking layer 230), and may be sufficiently thick to allow for the use of machining and/or polishing. For example, as illustrated in Fig. 2, a portion of the optical layer 220 may be removed (shown as removed material 240 in Fig. 2), such as using suitable machining and/or polishing techniques, resulting in the optical layer 220 having a final optical surface 250 that is smooth and flat.

In accordance with the present disclosure, the optical layer 220 and the tacking layer 230 are formed by physical vapor deposition (e.g., sputtering, e-beam melting, etc.) that is applied to the substrate 210. The deposition of these two layers may be conducted at temperatures low enough that the coefficient of thermal expansion (CTE) difference of the materials does not cause issues with adhesion or cracking of the low-temperature deposition (e.g., PVD or other vacuum deposition (VD) techniques) based layers. The difference between this approach and simply PVD coating the surface of the RB-SiC composite is the thickness and quality of the final layer. In this regard, the final layer(s) must have sufficient thickness, adhesion and quality that it may be post-processed by chemical and or mechanical means to a finer surface finish than was created by the original deposition.

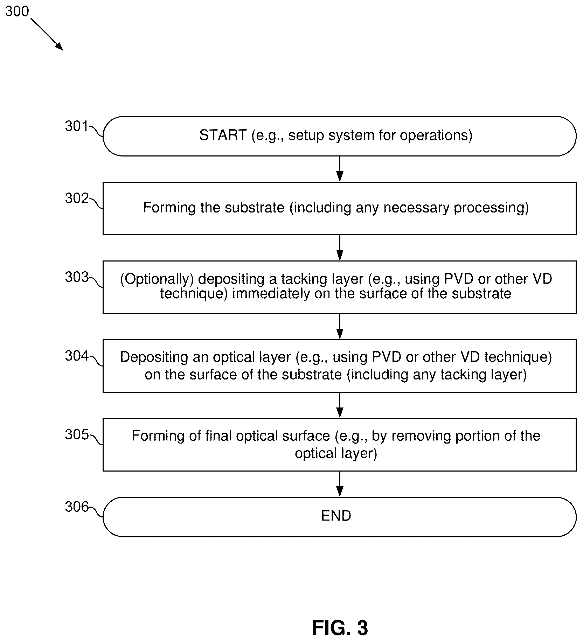

Fig. 3 illustrates a flowchart of an example process for forming reaction bonded silicon carbide (RB-SiC) with low-stress optical surfacing. Shown in Fig. 3 is a flow chart 300, comprising a plurality of example steps (represented as blocks 301-306), which may be performed using suitable apparatuses and/or devices, to form reaction bonded silicon carbide (RB-SiC) with low-stress optical surfacing.

In step 301, the process may be started, such as by setting up (e.g., powering, configuring, etc.) the apparatuses and/or devices required for performing the process.

In step 302, a substrate may be formed using suitable forming process, such as the process described with respect to Fig. 1. In this regard, the substrate may comprise reaction bonded silicon-silicon-carbide (RB-SiC) material that is multi-phase and/or otherwise not easily polished to an optical finish.

In step 303, a tacking layer 230 is optionally disposed immediately on the surface of the substrate 210, such as using a physical vapor deposition (PVD) or any other suitable vacuum deposition (VD) technique.

In step 304, an optical layer is formed on top of the substrate (including the tacking layer, if it is deposited), such as using a physical vapor deposition (PVD) or any other suitable vacuum deposition (VD) technique. In this regard, the optical layer and the tacking layer may be deposited using a single deposition step or two separate deposition steps.

In step 305, of final optical surface may formed, such as by removing a portion of the optical layer (e.g., using suitable machining and/or polishing techniques).

In step 306, the process for forming of the structure may end. In this regard, the ending step may optionally include any finishing machining/polishing of the structure. In this regard, the finishing machining/polishing may be done in variety of ways, and the disclosure is not limited to any particular approach, and as such any suitable approach may be used as long as the desirable outcome is achieved.

An example reaction bonded silicon carbide (RB-SiC) composite structure with low-stress optical surfacing, in accordance with the present disclosure, the comprises: a substrate that comprises silicon carbide (SiC) based composite; and an optical layer on top of the substrate; wherein the optical layer is formed on top of the substrate using a vacuum deposition (VD) technique; and wherein the optical layer has a final optical surface that is smooth and flat.

In an example embodiment, the optical layer is formed using a physical vapor deposition (PVD) technique.

In an example embodiment, the reaction bonded silicon carbide (RB-SiC) composite structure further comprises a tacking layer disposed immediately on a surface of the substrate.

In an example embodiment, the tacking layer is formed on top of the substrate using a vacuum deposition (VD) technique.

In an example embodiment, the optical layer and the tacking layer are formed using a single deposition step.

In an example embodiment, the optical layer and the tacking layer are formed using two separate deposition steps.

In an example embodiment, the tacking layer comprises material or compounds for providing or facilitating pre-determined tacking characteristics.

In an example embodiment, the material or compounds comprise one or more of chromium, nickel-chromium, and/or titanium.

In an example embodiment, the optical layer comprises material or compounds for providing or facilitating pre-determined optical surface related characteristics.

In an example embodiment, the material or compounds comprise one or more of copper, nickel, aluminum, tin, gold, and/or silver.

In an example embodiment, the final optical surface is formed by removing a portion of the optical layer.

In an example embodiment, the silicon carbide (SiC) based composite further comprises diamond and/or boron carbide (B₄C).

An example method, in accordance with the present disclosure, for forming a reaction bonded silicon carbide (RB-SiC) composite structure with low-stress optical surfacing comprises: forming a substrate using a silicon carbide (SiC) based composite; an optical layer on top of the substrate, wherein the optical layer is formed on top of the substrate using a vacuum deposition (VD) technique; and processing the RB-SiC composite structure such that the optical layer has a final optical surface that is smooth and flat.

In an example embodiment, the optical layer is formed using a physical vapor deposition (PVD) technique.

In an example embodiment, forming the reaction bonded silicon carbide (RB-SiC) composite structure further comprises forming a tacking layer disposed immediately on a surface of the substrate.

In an example embodiment, the method further comprises forming the tacking layer using a vacuum deposition (VD) technique.

In an example embodiment, the optical layer and the tacking layer are formed using a single deposition step.

In an example embodiment, the optical layer and the tacking layer are formed using two separate deposition steps.

In an example embodiment, the forming of the final optical surface comprises removing a portion of the optical layer.

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

As utilized herein the terms "circuits" and "circuitry" refer to physical electronic components (e.g., hardware), and any software and/or firmware ("code") that may configure the hardware, be executed by the hardware, and or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may, for example, operate on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic components (e.g., hardware) and any software and/or firmware ("code") that may configure the hardware, be executed by the hardware, and or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not enabled (e.g., by a user-configurable setting, factory trim, etc.).

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Various embodiments in accordance with the present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

Further aspects of the invention are described in the following clauses:
Clause 1. A reaction bonded silicon carbide (RB-SiC) composite structure with low-stress optical surfacing, the reaction bonded silicon carbide (RB-SiC) composite structure comprising:
   a substrate that comprises a silicon carbide (SiC) based composite; and
   an optical layer on top of the substrate;
   wherein the optical layer is formed on top of the substrate using a vacuum deposition (VD) technique; and
   wherein the optical layer has a final optical surface that is smooth and flat.
Clause 2. The reaction bonded silicon carbide (RB-SiC) composite structure according to clause 1, wherein the optical layer is formed using a physical vapor deposition (PVD) technique.
Clause 3. The reaction bonded silicon carbide (RB-SiC) composite structure according to clause 1, further comprising a tacking layer disposed immediately on a surface of the substrate.
Clause 4. The reaction bonded silicon carbide (RB-SiC) composite structure according to clause 3, wherein the tacking layer is formed on top of the substrate using a vacuum deposition (VD) technique.
Clause 5. The reaction bonded silicon carbide (RB-SiC) composite structure according to clause 3, wherein the optical layer and the tacking layer are formed using a single deposition step.
Clause 6. The reaction bonded silicon carbide (RB-SiC) composite structure according to clause 3, wherein the optical layer and the tacking layer are formed using two separate deposition steps.
Clause 7. The reaction bonded silicon carbide (RB-SiC) composite structure according to clause 3, wherein the tacking layer comprises material or compounds for providing or facilitating pre-determined tacking characteristics.
Clause 8. The reaction bonded silicon carbide (RB-SiC) composite structure according to clause 7, wherein the material or compounds comprise one or more of chromium, nickel-chromium, and/or titanium.
Clause 9. The reaction bonded silicon carbide (RB-SiC) composite structure according to clause 1, wherein the optical layer comprises material or compounds for providing or facilitating pre-determined optical surface related characteristics.
Clause 10. The reaction bonded silicon carbide (RB-SiC) composite structure according to clause 9, wherein the material or compounds comprise one or more of copper, nickel, aluminum, tin, gold, and/or silver.
Clause 11. The reaction bonded silicon carbide (RB-SiC) composite structure according to clause 3, wherein the final optical surface is formed by removing a portion of the optical layer.
Clause 12. The reaction bonded silicon carbide (RB-SiC) composite structure according to clause 1, wherein the silicon carbide (SiC) based composite further comprises diamond and/or boron carbide (B₄C).
Clause 13. A method comprising:
   forming a reaction bonded silicon carbide (RB-SiC) composite structure with low-stress optical surfacing, wherein the forming comprises:
   forming a substrate using a silicon carbide (SiC) based composite;
   an optical layer on top of the substrate, wherein the optical layer is formed on top of the substrate using a vacuum deposition (VD) technique; and
   processing the RB-SiC composite structure such that the optical layer has a final optical surface that is smooth and flat.
Clause 14. The method according to clause 13, wherein the optical layer is formed using a physical vapor deposition (PVD) technique.
Clause 15. The method according to clause 13, wherein forming the reaction bonded silicon carbide (RB-SiC) composite structure further comprises forming a tacking layer disposed immediately on a surface of the substrate.
Clause 16. The method according to clause 15, further comprising forming the tacking layer using a vacuum deposition (VD) technique.
Clause 17. The method according to clause 15, wherein the optical layer and the tacking layer are formed using a single deposition step.
Clause 18. The method according to clause 15, wherein the optical layer and the tacking layer are formed using two separate deposition steps.
Clause 19. The method according to clause 13, wherein forming the final optical surface comprises removing a portion of the optical layer.

## Claims

1. A reaction bonded silicon carbide (RB-SiC) composite structure with low-stress optical surfacing, the reaction bonded silicon carbide (RB-SiC) composite structure comprising:
a substrate that comprises a silicon carbide (SiC) based composite; and
an optical layer on top of the substrate;
wherein the optical layer is formed on top of the substrate using a vacuum deposition (VD) technique; and
wherein the optical layer has a final optical surface that is smooth and flat.

2. The reaction bonded silicon carbide (RB-SiC) composite structure according to claim 1, wherein the optical layer is formed using a physical vapor deposition (PVD) technique.

3. The reaction bonded silicon carbide (RB-SiC) composite structure according to claim 1, further comprising a tacking layer disposed immediately on a surface of the substrate.

4. The reaction bonded silicon carbide (RB-SiC) composite structure according to claim 3, wherein the tacking layer is formed on top of the substrate using a vacuum deposition (VD) technique.

5. The reaction bonded silicon carbide (RB-SiC) composite structure according to claim 3, wherein the optical layer and the tacking layer are formed using a single deposition step or using two separate deposition steps.

6. The reaction bonded silicon carbide (RB-SiC) composite structure according to claim 3, wherein the tacking layer comprises material or compounds for providing or facilitating pre-determined tacking characteristics, wherein the material or compounds preferably comprise one or more of chromium, nickel-chromium, and/or titanium.

7. The reaction bonded silicon carbide (RB-SiC) composite structure according to claim 1, wherein the optical layer comprises material or compounds for providing or facilitating pre-determined optical surface related characteristics, wherein the material or compounds preferably comprise one or more of copper, nickel, aluminum, tin, gold, and/or silver.

8. The reaction bonded silicon carbide (RB-SiC) composite structure according to claim 3, wherein the final optical surface is formed by removing a portion of the optical layer.

9. The reaction bonded silicon carbide (RB-SiC) composite structure according to claim 1, wherein the silicon carbide (SiC) based composite further comprises diamond and/or boron carbide (B₄C).

10. A method comprising:
forming a reaction bonded silicon carbide (RB-SiC) composite structure with low-stress optical surfacing, wherein the forming comprises:
forming a substrate using a silicon carbide (SiC) based composite;
an optical layer on top of the substrate, wherein the optical layer is formed on top of the substrate using a vacuum deposition (VD) technique; and
processing the RB-SiC composite structure such that the optical layer has a final optical surface that is smooth and flat.

11. The method according to claim 10, wherein the optical layer is formed using a physical vapor deposition (PVD) technique.

12. The method according to claim 10, wherein forming the reaction bonded silicon carbide (RB-SiC) composite structure further comprises forming a tacking layer disposed immediately on a surface of the substrate.

13. The method according to claim 12, further comprising forming the tacking layer using a vacuum deposition (VD) technique.

14. The method according to claim 12, wherein the optical layer and the tacking layer are formed using a single deposition step or using two separate deposition steps.

15. The method according to claim 10, wherein forming the final optical surface comprises removing a portion of the optical layer.
